## Europäisches Patentamt

(19) **European Patent Office**

**Office européen des brevets**

(11) Veröffentlichungsnummer: **0 126 737**

**B1**

(12) # EUROPÄISCHE PATENTSCHRIFT

(45) Veröffentlichungstag der Patentschrift:
03.09.86

(21) Anmeldenummer: **83903524.3**

(22) Anmeldetag: **18.11.83**

(86) Internationale Anmeldenummer:
**PCT/EP 83/00309**

(87) Internationale Veröffentlichungsnummer:
**WO 84/02181 (07.06.84 Gazette 84/14)**

(51) Int. Cl.⁴: **F 28 G  11/00,** F 02 B  77/04

(54) **VERFAHREN ZUR REINIGUNG VON WÄRMETAUSCHERN FÜR MOTORENABGASE.**

(30) Priorität: **22.11.82  DE 3243114**
**18.07.83  DE 3325872**

(43) Veröffentlichungstag der Anmeldung:
**05.12.84 Patentblatt 84/49**

(45) Bekanntmachung des Hinweises auf die Patenterteilung:
**03.09.86 Patentblatt 86/36**

(84) Benannte Vertragsstaaten:
**AT BE CH DE FR GB LI NL**

(56) Entgegenhaltungen:
**EP-A-0 079 033**
**DE-A-3 140 113**
**DE-B-1 097 461**
**GB-A-849 053**

(73) Patentinhaber: **KRAMB MOTHERMIK KG,**
**Koblenzerstrasse 72, D-6540 Simmern (DE)**

(72) Erfinder: **KRAMB, Jan, Koblenzerstrasse 72, D-6540**
**Simmern (DE)**

(74) Vertreter: **Lorenzen, Knud, Dipl.- Chem. Dr.,**
**Morassistrasse 8, D-8000 München 5 (DE)**

## Beschreibung

### Technisches Gebiet der Erfindung

Die Erfindung betrifft ein Verfahren zur Erhöhung des Wirkungsgrades bzw. zur Reinigung von Wärmetauschern für Abgase aus Verbrennungsmotoren von stationären Anlagen zum Betrieb von Wärmepumpen oder zur gekoppelten Erzeugung von Strom und Wärme.

### Stand der Technik

Aus der britischen Patentschrift 849 053 ist bereits ein Verfahren zur Entfernung von Ablagerug en aus ölbefeuerten Öfen bekannt, bei welchem die heißen Abgase durch einen Wärmetauscher geleitet werden und Ablagerungen, insbesondere schwefelhaltigen Ablagerungen, auf den primärseitigen Wärmetauscherflächen dadurch besser entfernt werden, daß diese Wärmetauscherflächen durch periodisches Abschalten des sekundären, gasförmigen Wärmetransportmediums auf höhere Temperatur aufgeheizt werden, um die Ablagerungen zu trocknen. Durch dieses Trocknen der Ablagerungen auf der Primärseite soll deren Entfernung durch Waschen mit Wasser erleichtert werden. Als Maximaltemperatur ist in dieser britischen Patentschrift 849 053 149 °C (300°F) genannt.

Aus der deutschen Auslegeschrift 1 097 461 ist ein Verfahren zum Reinigen eines Regenerativwärmetauschers, der wechselweise von Wärme abgebendem Medium, wie Abgasen von Verbrennungsmotoren, und Wärme aufnehmenden Medien, wie Verbrennungsluft, durchströmt wird, bekannt. Die auf dem Regenerativwärmetauschern sich ablagernden Rußteilchen werden gemäß der vorbekannten Verfahrensweise von der Speichermasse des Wärmetauscherkörpers dadurch entfernt, daß der vom Wärme abgebenden Medium, zum Beispiel den Abgasen, durchströmte Wärmetauscherkörper auf eine solche Temperatur gebracht wird, daß die Ablagerungen verbrannt und vom Strom des Wärme abgebenden Mediums weggetragen werden. Als Quelle für Abgase sind in dieser deutschen Auslegeschrift insbesondere in Fahrzeuge eingebaute Gasturbinentriebwerke genannt.

Demgegenüber betrifft das vorliegende Verfahren die Reinigung von Wärmetauscherflächen von stationär betriebenen Anlagen ebenso durch Erhöhung der Temperatur der Wärmetauscherflächen durch die heißen Abgase, jedoch bei stationär betriebenen Anlagen und bei Wärmetauschern, welche feststehende Wärmetauschkanäle für jeweils ein primäres und sekundäres Wärmetransportmedium aufweisen und bei denen die Medien je eine Seite der Kanalwand berühren, d.h. im Gegensatz zur Speichermasse von Regenerativwärmetauschern, nicht mit den Wärmetauscherkanälen wechselweise in Kontakt kommen.

Bei stationären Anlagen zum Betrieb von Wärmepumpen oder zur gekoppelten Erzeugung von Strom und Wärme, welche als Antrieb Verbrennungsmotoren Benutzen, ist es Bereits bekannt, die zwangsläufig neben der mechanischen Leistung zum Betrieb der Wärmepumpe oder des Generators für den elektrischen Strom anfallende Wärme möglichst vollständig auszunutzen. Hierbei ist es relativ einfach, die im Verbrennungsmotor anfallende Wärme abzuführen, da solche Verbrennungsmotoren üblicherweise wassergekühlte Verbrennungsmotoren sind. Jedoch ist es auch im Fall von luftgekühlten Verbrennungsmotoren ohne weiteres möglich, die anfallende Motorenwärme einem Heizsystem, beispielsweise über einen als Puffer wirkenden Warmwasserspeicher, zuzuführen. Ein erheblicher Anteil der mit den Kraftstoffen dem Motor zugeführten Energiemenge ist jedoch noch in den Abgasen enthalten, größenordnungsmäßig liegt dieser Anteil zwischen 25 und 35 % der durch den Kraftstoff zugeführten Energiemenge. Daher ist es für einen wirtschaftlichen Betrieb praktisch unerläßlich, auch noch die in den Abgasen enthaltene Wärme für Heizzwecke oder zur Warmwasserbereitung auszunutzen. Solche Abgase werden daher durch Wärmetauscher durchgeleitet, um die in ihren enthaltene Nutzwärme möglichst weitgehend auszunutzen.

Falls solche stationären Anlagen mit flüssigen Kraftstoffen und insbesondere mit Dieselöl bzw. Heizöl oder auch mit Mischungen aus Heizöl/Dieselöl plus aufbereitetem Altöl betrieben werden, treten an den Wärmetauscherflächen mit der Zeit Ablagerungen auf, d. h. im Abgas der Verbrennungsmotoren enthaltene Rußteilchen lagern sich an den Wandungen des Tauschers ab. Falls es sich um einen sehr wirksamen Wärmetauscher handelt, bei welchem der Taupunkt der Abgase des Verbrennungsmotors noch unterschritten wird, bildet sich ferner an den Wärmetauscherflächen ein Kondensat, in welchem diese Rußteilchen noch verkleben. Eine solche Kondensatbildung würde sich im Betrieb nur durch überhöhte Temperaturen vermeiden lassen, dies würde jedoch einen schlechteren Gesamtwirkungsgrad einer solchen stationären Anlage zum Betrieb von Wärmepumpen oder zur gekoppelten Erzeugung von Strom und Wärme mit sich bringen. Ein solches sich auf den Wärmetauscherflächen abscheidendes Kondensat besteht je nach verwendetem Kraftstoff für den Verbrennungsmotor aus einer verdünnten Lösung von schwefliger Säure und/oder Schwefelsäure. Weiterhin können sich neben Ruß auch noch im Abgas enthaltene Aschteilchen auf den Wärmetauscherflächen ablagern. Auf den Wärmetauscherflächen bildet sich daher an den Stellen des Wärmetauschers, an denen der Taupunkt unterschritten wird, ein schlammiger Brei aus Ruß, Asche, Wasser und den genannten Säuren, wobei letztere mit den Wärmetauscherflächen auch noch in Reaktion treten können.

Diese Erscheinungen führen dazu, daß die Rohrwandungen des Wärmetauschers langsam beschlagen bzw. mit einem Belag versehen werden, so daß der Wirkungsgrad des Wärmetauschers für die Abgase und damit auch der Gesamtwirkungsgrad einer solchen Anlage schlechter werden. Ein weiterer Nachteil ist, daß bei sehr starker Bildung von Belägen bzw. Ablagerungen die Strömungswiderstände im Wärmetauscher so zunehmen können, daß ein einwandfreier Betrieb des Verbrennungsmotors aufgrund eines Rückstaus nicht mehr möglich ist, da mit zunehmendem Rückstau der mechanische Wirkungsgrad des Motors durch Verschlechterung des Füllungsgrades abnimmt.

Bei den Wärmetauschern für die Abgase kann es sich sowohl um Gas/Abgas-Wärmetauscher als auch um Flüssigkeit/Abgas-Wärmetauscher handeln, wobei im Fall von Flüssigkeiten als sekundäres Wärmetransportmedium Wasser die üblicherweise verwendete Flüssigkeit ist.

Bei diesen Arten von Wärmetauschern treten die zuvor geschilderten Erscheinungen auf, ganz besonders sind sie jedoch im Fall von Flüssigkeit/Abgas-Wärmetauschern unangenehm.

### Zusammenfassung der Erfindung

Aufgahe der vorliegenden Erfindung ist daher ein Verfahren zur Erhöhung des Wirkungsgrades bzw. zur Reinigung von Wärmetauschern mit feststehenden Wärmetauschkanälen für ein primäres und sekundäres Wärmetransportmedium, wobei die Medien je eine Seite der Kanalwand berühren, für Abgase aus Verbrennungsmotoren von stationären Anlagen zum Betrieb von Wärmepumpen oder zur gekoppelten Erzeugung von Strom und Wärme, wobei die Abgase als primäres Wärmetransportmedium dienen, das einen kontinuierlichen Betrieb mit geringem Wartungsaufwand ermöglicht.

Bei dem erfindungsgemäßen Verfahren wird der Wärmetauscher zeitweise nach Entleeren des flüssigen sekundären Wärmetransportmediums oder bei abgeschalteter Zirkulation des gasförmigen sekundären Wärmetransportmediums durch die heißen Abgase auf eine zur selbsttätigen Reinigung der Wärmetauscherflächen ausreichende Temperatur aufgeheizt.

Gemäß bevorzugten Ausführungsformen wird das erfindungsgemäße Verfahren periodisch zu vorher eingestellten, frei wählbaren Zeitpunkten mittels einer automatisch arbeitenden Steuerungseinrichtung durchgeführt. Hierdurch ist es möglich, günstige Zeitpunkte für die Reinigung vorher auszuwählen, z. B. Zeiten, in denen kein allzu großer Wärmebedarf, jedoch ein höherer Bedarf an mechanischer Leistungsabgabe, d. h. Leistungsabgabe für die Wärmepumpe oder für einen elektrischen Generator, besteht.

Gemäß einer weiteren bevorzugten Ausführungsform wird das erfindungsgemäße Verfahren nach frei wählbaren Betriebszeiten des Verbrennungsmotors mittels einer automatisch arbeitenden Steuerungseinrichtung durchgeführt. Dies hat den Vorteil, daß eine zu starke Verschmutzung und damit Absenkung des Wirkungsgrades des Abgaswärmetauschers sicher vermieden werden kann, falls die Anlage nicht dauernd von Bedienungspersonal gewartet wird, sondern weitgehend automatisch gesteuert wird.

Bei einer weiteren bevorzugten Ausführungsform wird das erfindungsgemäße Verfahren immer dann durchgeführt, wenn eine vorher gewählte Grenztemperatur der aus dem Wärmetauscher austretenden Abgase erreicht ist, wobei das Verfahren auch in diesem Fall vorteilhafterweise mittels einer automatisch arbeitenden Steuerungseinrichtung durchgeführt wird.

Bei einer weiteren bevorzugten Ausführungsform des Verfahrens wird es zu Zeiten hohen Bedarfts an mechanishcer Leistungsabgabe des Verbrennungsmotors jedoch bei geringem Wärmebedarf durchgeführt, wobei es vorteilhafterweise mittels einer automatisch arbeitenden Steuerungseinrichtung durchgeführt wird.

Bei sehr starker Verschmutzung des Abgaswärmetauschers, d. h. insbesondere bei starken Rußablagerungen, hat es sich als vorteilhaft herausgestellt, wenn das Verfahren nur dann durchgeführt wird, wenn wenigstens 50% der möglichen mechanischen Leistungsabgabe des Verbrennungsmotors an die Wärmepumpe oder den Generator für den elektrischen Strom abgegeben werden. Der Grund hierfür ist, daß in einem solchen Fall das Abgas einen geringeren Sauerstoffanteil besitzt, so daß die Rußablagerungen langsamer bei Erreichen der Temperaturen durch das Aufheizen durch das Abgas verbrennen. Es hat sich nämlich gezeigt, daß bei sehr starken Rußablagerungen und Durchführung des Verfahrens im Leerlauf des Motors, d. h. OHne oder ohne wesentliche mechanische Leistungsabgabe an eine Wärmepumpe oder einen Generator für elektrischen Strom, das Abgas einen so hohen Sauerstoffanteil besitzt, daß starke Rußablagerungen auf den Wärmetauscherflächen regelrecht ausbrennen, wodurch der Wärmetauscher auf eine zu hohe Temperatur beim Reinigungsvorgang aufgeheizt wird.

Bei dem erfindungsgemäßen Verfahren ist es bei Benutzung eines Wärmetauschers mit flüssigem sekundärem Wärmetransportmedium, d. h. insbesondere Wasser, wesentlich, daß der Wärmetauscher nach dem Aufheizvorgang und Reinigungsvorgang wieder auf eine Temperatur unterhalb des Siedepunkts des flüssigen, sekundären Wärmetransportmediums abgtekühlt wird, d. h. im Fall von wasser auf Temperaturen unterhalb von 100 °C.

Dies kann am einfachsten dadurch erreicht werden, daß der Wärmetauscher nach dem Aufheiz- und Reinigungsvorgang durch Abschalten des Verbrennungsmotors, d. h. bei Betriebsstillstand der Anlage, von selbst auf eine geeignete Temperatur, z. B. unterhalb von 100 °C, abkühlen gelassen wird. Es gibt jedoch auch Fälle, in denen eine solche Abschaltung des Verbrennungsmotors, d. h. ein Stillegen der Anlage, nicht möglich ist. Gemäß einer weiteren bevorzugten Ausführungsform des erfindungsgemässen Verfahrens wird daher bei Benutzung eines Wärmetauschers mit flüssigen, sekundärem Wärmetransportmedium nach Beeindigung des Aufheizvorgangs und vor dem Wiedereinfüllen des flüssigen Wärmetransportmediums Luft in den sekundären Wärmekreislauf und/oder Luft zusammen mit dem Abgas in den Wärmetauscher eingeblasen, wodurch eine ausreichende Abkühlung erreicht werden kann, insbesondere wenn die Anlage mit nur geringer mechanischer Leistungsabgabe, z. B. unterhalb von 50% der maximal möglichen mechanischen Leistungsabgabe, betrieben wird. Weiterhin ist es möglich, im Fall von Wasser als flüssigem, sekundärem Wärmetransportmedium, d. h. einem praktisch unbegrenzt zur Verfügung stehenden Wärmetransportmedium, das Füllen des Wärmetauschers sehr langsam vorzunehmen, so daß überschüssige im Wärmetauscher gespeicherte Wärme durch Verdampfen eines Teils des Wassers beim Wiederauffüllen abgeführt wird. Dieses verdampfte Wasser tritt durch die Öffnung aus, welche beim Aufheizen eines Wärmetauschers für ein flüssiges, sekundäres Wärmetransportmedium sowieso immer vorhanden sein muß, um ein Verdampfen von Resten dieses flüssigen Mediums während des Aufheizvorganges zu ermöglichen und so den Aufbau von Überdruck auf der Sekundärseite des Wärmetauschers sicher zu vermeiden. Durch das Wassereinfüllen erfolgt ein Abschrecken der heißen Flächen, wodurch haftende Beläge sich lösen. Auch bei Verwendung eines Gas/Abgas-Wärmetauschers ist es während des Aufheiz- und Reinigungsvorgangs, d. h. bei abgeschalteter Zirkulation des fasförmigen sekundären Wärmetransportmediums erforderlich, die Sekundärseite des Wärmetauschers gegen die Atmposphäre offen zu halten, damit sich kein Überdruck aufbauen kann.

Bei der zuvor beschriebenen Verfahrensweise unter Verwendung eines Flüssigkeit/Abgas-Wärmetauschers wird vor dem Aufheizen des Wärmetauschers durch die heißen Abgase für dessen Reinigung eine Entleerung des Wärmetauschers dadurch erreicht, daß gleichzeitig mit dem Schließen der Zirkulationsventile für das flüssige sekundäre Wärmetransportmedium am Wärmetauscher weitere Ventile geöffnet werden, um das im Wärmetauscher befindliche, flüssige sekundäre Wärmetransportmedium in einen Vorratsbehälter abzulassen. Der auf diese Weise auf der Sekundärseite entleerte Wärmetauscher wird dann durch die heißen Abgase auf die zur Reinigung erforderliche Temperatur aufgeheizt.

Diese Verfahrensweise bedingt zusätzliche Ventile zum Entleeren des Wärmetauschers und darüber hinaus zusätzliche Arbeitsvorgänge zur Betätigung dieser Ventile.

Es wurde gefunden, daß es zum Entleeren des Wärmetauschers ausreicht, wenn entweder das obere Zirkulationsventil oder beide Zirkulationsventile für das flüssige sekundäre Wärmetransportmedium geschlossen werden, sofern ein Ausgleichsgefäß für das flüssige sekundäre Wärmetransportmedium in den von der Zirkulation abgeschlossenen Wärmetauscher vorhanden ist. Falls das Gesamtsystem für das flüssige, sekundäre Wärmetransportmediun, z. B. einer Heizungsanlage, ein ausreichendes Ausgleichsgefäß besitzt und nur das obere Zirkulationsventil am Wärmetauscher geschlossen wird, muß kein gesondertes Ausgleichsgefäß vorgesehen werden, sofern dieses bereits normalerweise vorgesehene Ausgleichsgefäß eine ausreichende Kapazität zur Aufnahme des Volumens des aus dem Wärmetauscher herausgedrückten, flüssigen, sekundären Wärmetransportmediums aufweist. Durch die Nichtabführung der Wärme aus dem Wärmetauscher durch Unterbrechung der Zirkulation durch Schließen der Zirkulationsventile heizt sich das im Wärmetauscher befindliche, flüssige, sekundäre Wärmetransportmedium auf und beginnt bei geeigneter Temperatur zu verdampfen, wobei diese Verdampfungstemperatur durch einen eventuellen durch das Ausgleichsgefäß bedingten hydrostatischen Druck geringfügig gegenüber der Siedetemperatur bei dem herrschenden Normaldruck (atmosphärischem Druck) erhöht sein kann. Da durch die heißen Abgase mit einer Temperatur im der Größenordnung von 600 bis 650°C die Verdampfungstemperatur des sekundären Wärmetransportmediums, üblicherweise von Wasser, weit überschritten wird, bildet sich mit zunehmend steigender Temperatur über dem noch flüssigen, sekundären Wärmetransportmedium in diesem abgesperrten Wärmetauscher ein Dampfpolster, durch welches das flüssige sekundäre Wärmetransportmedium vollständig oder weitgehend vollständig aus dem Wärmetauscher herausgedrückt wird, so daß dieser au; die zur Reinigung erforderliche Temperatur durch die heißen Abgase, z. B. in der Größenordnung von 600 bis 850 °C, aufgeheizt wird. Nach Abschluß des Reinigungsvorgangs, welcher sonst nach der zuvor bereits beschriebenen Weise erfolgt, ist eine Wiederabkühlung des auf geheizten Wärmetauschers erforderlich. Hierzu müssen die heißen Abgase von diesem Wärmetauscher ferngehalten werden, wozu sie durch einen zweiten Wärmetauscher geleitet werden, dessen Zirkulationsventile geöffnet sind und in dem die durch die Abgase den Wärmetauscher zugeführte Wärme abgeleitet wird. Es wurde gefunden, daß nach Abschalten der heißen Abgase vom ersten Wärmetauscher nach dessen Abkühlung eine vollständige Füllung der Sekundärseite des Wärmetauschers mit flüssigen sekundären Wärmetransportmedium erfolgt, so daß nach der Abkühlung und der Füllung des Sekundärraums des Wärmetauschers das obere Zirkulationsventil oder beide Zirkulationsventile wieder geöffnet werden können. Dieser Wärmetauscher steht nach Öffnung des/der Zirkulationsventil(e) wieder für eine Beaufschlagung mit heißen Abgasen zur Verfügung. Voraussetzung zur Durchführung des erfindungsgemäßen Verfahrens ist daher, daß wenigstens zwei Wärmetauscher und gegebenenfalls ein Ausgleichsgefäß für das flüssige, sekundäre Wärmetransportmedium vorgesehen werden. Nach Verschmutzung des zweiten Wärmetauschers wird die zuvor für den ersten Wärmetauscher beschriebene Verfahrensweise hieran durchgeführt, d. h. dieser zweite Wärmetauscher wird dann durch Schließen des oberen Zirkulationsventils oder beider Zirkulationsventile für das flüssige sekundäre Wärmetransportmedium von der Zirkulation abgeschlossen und heizt sich auf, wobei nach der Reinigung dieses zweiten Wärmetauschers die heißen Abgase auf den ersten Wärmetauscher umgeschaltet werden.

Weiterhin wurde gefunden, daß es auch möglich ist, zwei Wärmetauscher und gegebenenfalls ein Ausgleichsgefäß für das flüssige sekundäre Wärmetransportmedium vorzusehen, wobei die heißen Abgase mit wechseln der Strömungsrichtung durch die beiden hintereinandergeschalteten Wärmetauscher geleitet werden. Zum Entleeren des ersten Wärmetauschers werden dessen oberes Zirkulationsventil oder dessen beide Zirkulationsventile für das flüssige sekundäre Wärmetransportmedium geschlossen und das flüssige sekundäre Wärmetransport medium wird entsprechend der zuvor gegebenen Beschreibung nach Aufheizen und Verdampfen aus diesem in Strömungsrichtung ersten Wärmetauscher in das Ausgleichsgefäß gedrückt. Nach Aufheizen des Wäimetauschers durch die heißen Abgase und Reinigung seiner Wärmetauscherflächen werden die heißen Abgase auf den zweiten Wärmetauscher geschaitet und geben den größten Teil ihrer Wärme hierin ab, wobei in diesem zweiten Wärmetauscher die Zirkulationsventile für das flüssige sekundäre Wärmetransportmedium natürlich geöffnet sind. Hierdurch wird die Abkühlung des aufgeheizten ersten Wärmetauschers und die Füllung seines Sekundärraums mit dem flüssigen sekundären Wärmetransportmedium wieder erreicht, so daß anschließend das obere Zirkulationsventil oder beide Zirkulationsventile dieses ersten Wärmetauschers wieder geöffnet werden können.

Bei dieser Ausführungsform des erfindungsgemäßen Verfahrens ist es vorteilhaft, wenn zwischen den beiden hintereinandergeschalteten Wärmetauschern ein Zyklonabscheider angeordnet ist, der je nach Strömungsrichtung umgeschaltet werden kann. Beim Aufheizen des in Strömungsrichtung vorne liegenden Wärmetauschers und dessen Reinigung treten sowohl Kondensat, insbesondere Ölkondensat eines Dieselmotors, als auch Rußteilchen aus diesem ersten Wärmetauscher aus, die sich ohne zwischengeschalteten Rußabscheider in dem zweiten Wärmetauscher, der sich ja auf niedriger Temperatur befindet, abgelagert werden könnten und dadurch zu einer Verstopfung der Wärmetauscher im Lauf der Zeit führen könnten, auf jeden Fall aber eine vorzeitige Reinigung dieses zweiten Wärmetauschers nötig machen könnten.

## Kurzbeschreibung der Zeichnung

Die Erfindung wird anhand der Zeichnung näher erläutert, in der Zeichnung sind:
Fig. 1: eine schematische Darstellung zur Erläuterung d ersten Ausführungform des erfindungsgemäßen Verfahrens;
Fig. 2: eine schematische Darstellung zur Erläuterung der Ausführungsform des erfindungsgemäßen Verfahrens mit parallel angeordneten, wechselweise geschalteten Wärmetauschern;
Fig. 3: eine schematische Darstellung zur Erlauterung des erfindungsgemäßen Verfahrens mit hintereinander geschalteten Wärmetauschern;
Fig. 4: eine Darstellung des beim erfindungsgemäßen Verfahren angewandten Rohr-Rußabscheiders.

## Ausführungsbeispiele

In der Fig, 1 bedeutet M einen Verbrennungsmotor, in vorliegenden Fall einen Dieselmotor, dessen Wasserkühlung mit K bezeichnet ist. Die in dieser Wasserkühlung anfallende Wärme wird ebenfalls - wie nicht näner erläutertfür Heizungszwecke verwendet. Dieser Motor treibt über eine Welle den elektrischen Generator G, dessen Strom entweder in das Netz abgeführt oder zum Betrieb von elektrischen Einrichtungen verwendet werden kann. Die Abgase treten über die Leitung A aus dem Motor aus und in den mit W bezeichneten Wärmetauscher ein. Dieser Wärmetauscher ist in vorliegenden Fall als Rohrbündeltauscher dargestellt, wobei in der Zeichnung vier Wärmetauscherrohre dargestellt sind. Am unteren Teil des Wärmetauschers W treten die abgekühlten Abgase, die in Wärmetauscher die in ihnen enthaltene Wärme weitgehend an ein im vorliegenden Fall flüssiges, sekundäres Wärmetransportmedium T abgegeben haben, aus. Im vorliegenden Fall ist in diesem Austritt eine Sonde S zur Messung der Temperatur der aus dem Wärmetauscher W austretenden Abgase vorgesehen, ferner ein im folgenden noch erlähterter Zyklonabscheider Z. Der Wärmetauscher W weist im unteren Teil mehrere Anschlüsse und dazugehörige Absperrventile auf, die mit $V_1$, $V_4$ bzw. $V_5$ bezeichnet sind, weiterhin zwei weitere Ableitungen mit Absperrventilen im oberen Teil, welche $V_2$ und $V_3$ bezeichnet sind. Weiterhin ist in der Abgasleitung A, welche die Abgase vom Motor M zum Wärnetauscher W leitet, noch eine Abzweigung mit einem Ventil $V_6$ vorgesehen.

Das erfindungsgemäße Verfahren wird so durchgeführt, daß je nach dem Umständen, d. h. entweder einer festgelegten Betriebszeit oder eines zu hohen Anstiegs der durch die Sonde S gemessenen Temperatur beim aus dem Wärmetauscher W austretenden Abgas oder nach bestimmten Betriebszeiten, die im Kühlwasserkreislauf des Wärmetauschers W, d. h. dessen flüssigem, sekundärem Wärmetransportmediums, angeordneten Ventile $V_1$ und $V_2$ geschlossen werden. Gleichzeitig wird das Vertil $V_4$ und das Ventil $V_3$ geöffnet, wodurch das in Wärmetauscher W befindliche Wasser in einen - in der Figur nicht dargestellten - Vorratsbehälter abgelassen wird. Die Sekundärseite des Wärmetauschers W ist nunmehr frei von Wärmetransportmedium, d. h. Kühlflüssigkeit, so daß sich der Wärmetauscher W, der zur Vermeidung von Wärmeverlusten nach außen üblicherweise isoliert ist, sehr rasch durch die Abgase aus dem Motor aufheizt. Über die Sonde S kann ein ausreichender Temperaturanstieg festgestellt werden, d.h. ob eine zur Reinigung der Wärmetauscherflächen ausreichende Temperatur erreicht ist, wobei diese Temperatur durch einfache Vorversuche festgelegt werden kann, oder der Wärmetauscher durch die heißen Abgase bis zur maximal möglichen Temperatur durch diese Abgase aufgeheizt worden ist, wobei die maximal mögliche Temperatur ebenfalls durch einen einfachen Vorversuch ermittelt werden kann. Während dieses Aufheizvorgangs muß das Ventil $V_3$ immer geöffnet sein, um einen Überdruck auf der Sekundärseite des Wärmetauschers W zu vermeiden.

Nach ausreichendem Aufheizen des Wärmetauschers muß dieser vor dem Wiedereinfüllen des Wärmetransportmediuns, im vorliegenden Fall Wasser, abgekühlt werden. Dies kann entweder dadurch geschehen, daß der Motor M abgeschaltet wird und der Wärmetauscher durch die unvermeidlichen Wärmeverluste langsam abgekühlt wird. Diese Abkühlung kann auch dadurch beschleunigt werden, daß bei geöffnetem Ventil $V_5$ und geöffneten Ventil $V_3$ durch die Sekundärseite des Wärmetauschers ein Kühlluftstrom geblasen wird, weiterhin kann durch das Ventil $V_6$ auch auf der Abgasseite durch Einblasen von Luft eine raschere Abkühlung des Wärmetauschers erreicht werden. Falls es nicht möglich ist, den Motor M abzuschalten, d. h. die Anlage stillzulegen, kann durch starkes Einblasen von Luft über das Ventil $V_5$ auf der Sekundärseite und/oder von Luft durch das Ventil $V_6$ in die Abgasleitung ein ausreichendes Abkühlen des Wärmetauschers erreicht werden. In einem solchen Fall ist es allerdings vorteilhaft, das Wiederauffüllen des Wärmetauschers mit den Wärmetransportmedium, d. h. im vorliegenden Fall Wasser, sehr langsam bei geöffnetem Ventil $V_3$ vorzunehmen. Falls sich der Wärmetauscher noch auf einer Temperatur oberhalb von 100° C befindet, verdampft ein Teil des eingefüllten Wassers und tritt als Dampf über das Ventil $V_3$ in die Atmosphäre oder eine geeignete Kondensatvorrichtung ein, so daß der Wärmetauscher durch die hohe Verdampfungswärme des Wassers relativ rasch abgekühlt wird. Nach Füllen des Wärmetauschers mit Wärmetransportmedium, d. h. Wasser, kann dann das Ventil $V_3$ geschlossen und die Ventile $V_1$ sowie $V_2$ geöffnet werden, um damit den Wärmekreislauf wieder in Gang zu setzen. Das Wiederauffüllen des Wärmetauschers kann auch durch langsames Einfüllen erfolgen. Bei einer Versuchsanlage wurde ein Dieselmotor mit einem Hubraum von etwa 5500 cm³ verwendet, der mit einem Gemisch aus Heizöl und Altöl betrieben wurde. Das Altöl wurde in geeigneter Weise über Filter aufbereitet, um einen einwandfreien Betrieb zu ermöglichen. Der Motor hatte eine Wasserkühlung uhd trieb einen Innenpol-Synchrongenerator mit einer Leistung von 70 kVA an. Der Abgaswärmetauscher war ein senkrecht stehender Rohrbündeltauscher, der mit Wasser als Sekundär-Wärmetrsnsportmedium betrieben wurde und eine Höhe von etwa 2 m und einen Durchmesser von 22 cm besaß. Der Wärmetauscher war aus Stahl gefertigt, da die Verwendung von Stahl vorteilhaft ist, insbesondere da der Wärmeaustauscher beim Aufheizvorgang teilweise auf Temperaturen von 600 bis 650° C kommen kann. Das Rohrbündel des Wärmetauschers bestand aus 25 Stahlrohren mit einem Außendurchmesser von 2,7 cm. Der Wärmetauscher war an das Gefäß einer Warmwasserheizung angeschlossen, seine Vorlauftemperatur lag in der Größenordnung von 50° C, die Wasseraustrittstemperatur betrug etwa 70° C, diese ist jedoch etwas von der Belastung des Motors abhängig. Nach etwa 300 Betriebsstunden wurde der Wasserkreislauf des Wärmetauschers abgeschaltet, das hierin enthaltene Wasser in einen Behälter abgelassen umd dann bei geöffnetem Ventil $V_3$ etwa eine Stunde das Aufheizen der Wärmetauscherflächen durchgeführt. Eierbei ergab sich ein Aufheizen auf etwa 600 bis 650°C, wodurch der Tauscher zunächst völlig abtrocknete, und sich danach selbsttätig von Ruß reinigte. Hierbei verglühte ein Teil der Ablagerungen, der andere Teil der Ablagerungen wurde vom Abgas mitgerissen, und konnte in einer Rußfalle abgelagert werden. Die übrigen, flüchtigen bzw. verdampfbaren Bestandteile gelangten mit dem Abgas in die Atmosphäre, gegebenenfalls können sie über eine geeignete Waschvorrichtung auch aufgefangen und ausgewaschen werden.

Durch geeignete, an sich bekannte und nicht näher erläuterte Steuerungs- und Meßeinrichtungen wie Betriebsstundenzähler oder Temperaturmeßsonden und geeignete Steuerventile sowie eine vorprogrammierte Steuereinheit, kann das erfindungsgemäße Verfähren selbsttätig zu vorher frei gewählten Zeitpunkten oder Betriebszuständen durchgeführt werden, so daß hierzu keine Wartungsarbeiten durchzuführen sind, was besonders bei kleineren Anlagen Kostenersparnisse mit sich bringt.

Das erfindungsgemäße Verfahren kann auch in Abhängigkeit vom Rückstau der Abgase im Wärmetauscher bzw. dem Druckverlust im Wärmetauscher durchgeführt werden, d. h. bei Anstieg dieser Meßgrößen auf vorher frei wählbar eingestellte und durch Vorversuche ermittelte Werte, wird es durch eine automatisch arbeitende Steuerungseinrichtung ausgelöst und durchgeführt.

Bei dem Aufheizvorgang werden im Wärmetauscher von dessen Wänden teilchenförmige Ablagerungen freigesetzt, welche die Umwelt verschmutzen könnten, da sie mit den heißen Abgasen mitgerissen werden. Es hat sich als zweckmäßig herausgestellt, zum Auffangen dieser Teilchen nach dem Wärmetauscher einen praktisch ohne Druckverlust arbeitenden Zyklonabscheider anzubringen, in welchem auch während des normalen Betriebes des Wärmetauschers ein Teil der Rußteilchen der Abgase abgeschieden wird.

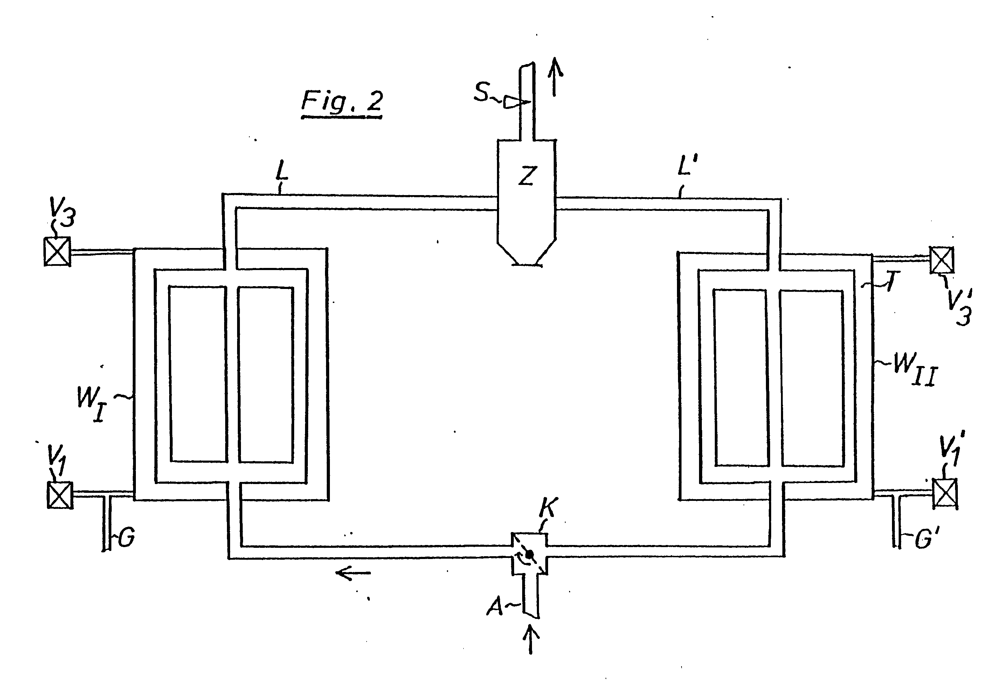

In der Fig. 2 werden Abgase aus einem nicht dargestellten Verbrennungsmotor über die Abgasleitung A zu einer Steuerklappe K geführt, welche die Weiterleitung der heißen Abgase entweder in den Wärmetauscher $W_I$ oder $W_{II}$ steuert. Die Wärmetauscher $W_I$ und $W_{II}$ sind jeweils mit zumindest oheren Ventilen $V_3$ bzw. $V_{3'}$ versehen, weiterhin vorteilhafterweise mit unteren Ventilen $V_1$ bzw. $V_{1'}$ zum Abschalten des Wärmetransportmediums T. Bei diesem Wärmetransportmedium handelt es sich üblicherweise um Wasser, wie es in Zentralheizungen verwendet wird. Die Wärmetauscher $W_I$ und $W_{II}$ sind in vorliegenden Fall als Rohrbündeltauscher dargesteilt. Bei den in der Fig. 2 dargestellten Betriebszustand werden die heißen Abgase durch die Klappe K zunächst in den Wärmetauscher $W_I$ eingeleitet und geben bein Durchtritt durch diesen Wärmetauscher $W_I$ ihre Wärmeenergie an das über die geöffneten Ventil $V_1$ und $V_3$ zirkulierende Wärmetransportmedium an das Heizungssystem ab. Die abgekühlten Abgase treten dann an oberen Ende des Wärmetauschers $W_I$ über die Abgasleitung L in den Zyklonabscheider Z, in welchem bein normalen Betrieb Rußteilchen abgeschieden werden können. Weiterhin ist entweder in der Abgasleitung L oder in der Austrittsleitung aus den Zyklon-Rußabscheider Z eine Sonde S vorgesehen, um die Temperatur der aus dem Wärmetauscher austretenden Abgase zu messen. Weiterhin sind noch Ausgleichsleitungen G bzw. G' sowie gegebenenfalls ein - in der Zeichnung nicht dargestelltes - Ausgleichsgefäß vorgesehen, welches eine ausreichende Kapazität zur Aufnahme des beim Entleeren eines der Wärmetauscher anfallenden Wärmetransportmediums besitzt. Falls die Heizungsanlage jedoch ein Ausgleichsgefäß mit ausreichender Kapazität aufweist, können die Ausgleichsleitungen G bzw. G' und das zusätzliche Ausgleichsgefäß entfallen.

Wenn der Wärmetauscher $W_I$ verschmutzt ist, wird zumidest das obere Ventil $V_3$ geschlossen, so daß die Zirkulation des Wärmetransportmediums in dem Wärmetauscher $W_I$ unterbrochen wird. Durch die heißen Abgase wird der Wärmetauscher fortschreitend von unten nach oben aufgeheimt und nach überschreiten des Siedepunkts des Wärmetransportmediums verdampft dieses unddrückt durch das sich zunehmend bildende Dampfpolster das flüssige Wärmetransportmedium aus dem Wärmetauscher $W_I$ in das Ausgleichsgefäß. Falls getrennte Ausgleichsleitungen G und G' sowie ein zusätzliches Ausgleichsgefäß vorhanden sind, kann auch das untere Ventil $V_1$ geschlossen werden. Durch die heißen Abgase wird der Wärmetauscher $W_I$ bei abgeschalteter Zirkulation, das heißt, geschlossenem Ventil $V_3$, dann fortschreitend durch die heißen Abgase auf eine zur Reinigung ausreichende Temperatur, üblicherweise 600°C bis 650°C erhitzt, wobei die Ablagerungen und Rußabscheidungen auf den Wärmetauscherflächen, das heißt, im Inneren der Rohrbündel, verbrennen bzw. losgelöst werden und über die Abgasleitung L weitgehend in dem Zyklon-Rußabscheider Z abgeschieden werden. Das Erreichen einer ausreichenden Temperatur in Wärmetauscher $W_I$ kann über die Sonde S kontrolliert werden. Nachdem die Reinigung des Wärmetauschers $W_I$ abgeschlossen ist, wird die Steuerklappe K umgelegt, so daß die heißen Abgase nunmehr über den sauberen Wärmetauscher $W_{II}$ durchgeleitet werden und hierin ihre Wärme auf das Wärmetransportmedium T bei geöffneten Ventilen $V_{1'}$ und $V_{3'}$ abgeben. Die heißen Abgase treten dann ebenfalls über die Abgasleitung L' in den Zyklon-Abscheider. Während die heißen Abgase durch den Wärmetauscher $W_I$ geleitet werden und hierin ihre Wärme an das Wärmetransportmedium, das heißt das Heizungssystem, abgeben, hat der Wärmetauscher $W_I$ ausreichend Zeit, sich von selbst durch Temperaturausgleich mit der Umgebung wieder abzukühlen, wobei nach Unterschreiten der Siedetemperatur des Wärmetransportmediums, d. h. im Fall vom Wasser 100 °C, dieses wieder von unten in den Wärmetauscher $W_I$ eintreten und diesen fortschreitend wieder vollständig füllen kann. Sobald der Wärmetauscher $W_{II}$ verschmutzt ist und gereinigt werden soll, wird zumindest das obere Ventil $V_3'$ geschlossen und der Reinigungsvorgang, wie zuvor unter Bezugnahme auf dem Wärmetauscher $W_I$ beschrieben, an diesem Wärmetauscher $W_{II}$ durchgeführt, wobei anschließend dann wieder der Wärmetauscher $W_I$ bei geöffneten Ventilen $W_1$ und $V_3$ als Wärmetauscher für die Heizungsanlage zur Verfügung steht.

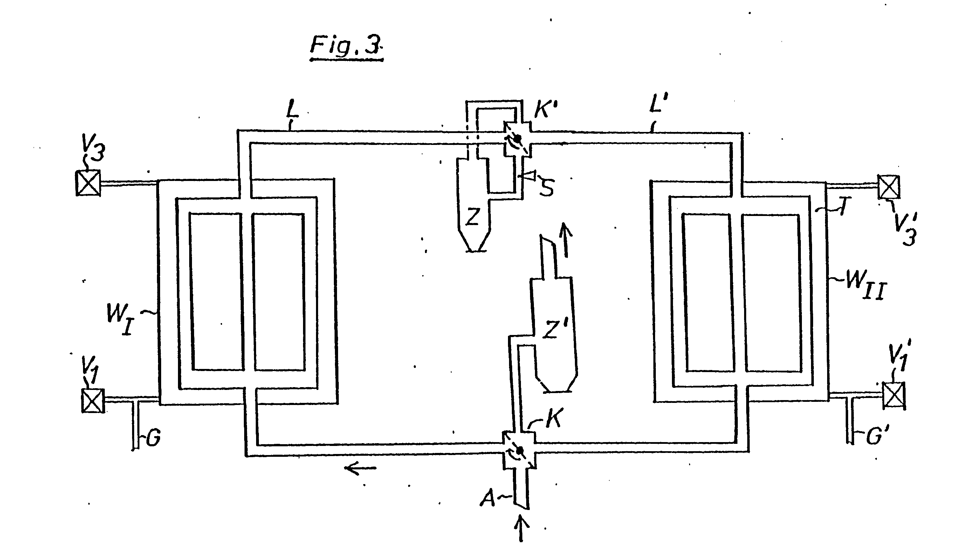

Bei der in der Fig. 3 dargestellten Ausführungsform sind die beiden Wärmetauscher hintereinander geschaltet. In der Fig. 3 haben die Einzelteile der bei dem erfindungsgemäßen Verfahren verwendeten Vorrichtung die gleichen Bezugszeichen wie bei der in der Fig. 2 dargestellten Vorrichtung.

Die heißen Abgase, welche über die Abgasleitung G über die Steuerklappe K zunächst in den Wärmetauscher $W_I$ geleitet. Nach dem Durchtritt durch diesen Wärmetauscher und Abgabe ihrer Wärme an das bei geöffneten Ventilen $V_1$ und $V_3$ zirkulierende Wärmetramsportmedium treten sie durch einen Zyklon-Abscheider, um eventuelle Rußteilchen in den Abgasen abzuscheiden, und nach diesem Zyklon-Abscheider Z über die Leitung L' in den Wärmetauscher $W_{II}$ ein.

Sobald der Wärmetauscher $W_I$ verschmutzt ist und gereinigt werden muß, wird zumindest das obere Ventil $V_I$ geschlossen, wobei jedoch die Ventile $V_3'$ und $V_1'$ des Wärmetauschers $W_{II}$ geöifnet sind. Durch fortschreitendes Aufheizen des Wärmetauschers $W_I$ wird nach Überschreiten des Siedepunkts des Wärmetransportmediums dieses aus dem Wärmetauscher $W_I$ entweder bei geöffnetem Ventil $V_3$ in das Ausgleichssystem des Heizungssystems oder bei geschlossenem Ventil $V_1$ über die gesonderte Ausgleichsleitung G in ein gesondertes Ausgleichsgefäß, das in der Figur nicht dargestellt ist, gedrückt. Da bei diesem Aufheizvorgang die heißen Abgase nicht vollständig ihre Wärmeenergie in dem Wärmetauscher $W_I$ zu dessen Reinigung abgeben, kann diese restliche Wärmeenergie der aus dem Wärmetauscher $W_I$ bzw. dem Zyklon-Abscheider Z austretenden Abgase noch im dem Wärmetauscher $W_{II}$, der an die Heizungsanlage angeschlossen ist, ausgenutzt werden. Nach dem Austritt aus den Wärmetauscher $W_{II}$ können die in jedem Fall abgekühlten Abgase noch über einen zweiten Zyklon-Abscheider Z' geführt werden, um eventuell hierin enthaltene Verunreinigungen, wie Rußteilchen usw., sicher abzuscheiden, um Umweltverschmutzungen zu vermeiden.

Bei der Ausführungsform gemäß Fig. 3 ist die Steuerklappe K so ausgebildet, daß sie gleichzeitig die Leitung der heißen Abgase aus der Abgasleitung G in den jeweiligen als ersten zu beaufschlagenden Wärmetauscher als auch die Leitung der aus dem zweiten Wärmetauscher austretenden gekühlten Abgase zu dem Zyklon-Abscheider Z' steuert. Eine synchron hierzu gesteuerte Klappe K' bewirkt die richtige Strömung durch den Zyklonabscheider Z Wenn der Wärmetauscher $W_I$ - wie in vorliegenden Fall beschrieben - durch die heißen Abgase bei Abtrennung von der Zirkulation des Wärmetransportmediums T ausreichend aufgeheizt und gereinigt worden ist, wird die Steuerklappe K umgelegt, so daß die heißen Abgase aus der Abgasleitung G nunmehr zuerst in den Warmetauscher $W_{II}$ eintreten, hierin ihre Wärme abgeben und anschließend nach dem Durchtritt durch den Zyklon-Rußabscheider Z den Wärmetauscher $W_I$ wieder abkühlen, so daß dieser sich nach Unterschreiten des Siedepunkts des Wärmetransportmediums, d. h. üblicherweise etwa 100 °C im Fall von Wasser, wieder mit Wärmetransportmedium füllt. Anschließend kann dann wieder das Ventil $V_3$ und gegebenenfalls das Ventil $V_1$ geöffnet werden, um die Zirkulation des Wärmetransportmediums im Wärmetauscher $W_I$ wieder herzustellen. Sobald der Wärmetauscher $W_{II}$ verschmutzt ist, wird zumindest das obere Ventil $V_3$ geschlossen und der Reinigungsvorgang, wie zuvor mit Bezug auf den Wärmetauscher $W_I$ beschrieben, hieran durchgeführt. Der Vorteil dieser Ausführungsform gemäß Fig. 3 ist darin zu sehen, daß ein Teil der Wärme der heißen Abgase während der Reinigungszeit für einem Wärmetauscher noch in dem zweiten Wärmetauscher für Heizungszwecke ausgenutzt werden kann, während bei der Ausführungsform gemäß Fig. 2 während des Zeitraums des Reinigungsvorgangs die heißen Abgase bis zur Beendigung des Reinigungsvorgangs keime Wärme an das Heizungssystem mehr abgeben können.

Auch bei den mit Bezug auf die Fig. 2 und Fig. 3 beschriebenen Ausführungsformen kann das erfindungsgemäße Verfahren automatisch gesteuert durchgeführt werden, d. h. in Abhängigkeit vom Rückstau der Abgase im einem der Wärmetauscher bzw. dem Druckverlust in einem der Wärmetauscher, d. h. bei Anstieg dieser Meßgrößen auf vorher freiwählbar eingestellte und durch Vorversuche ermittelte Werte, wird es durch automatisch arbeitende Steuerungseinrichtungen ausgelöst und durchgeführt. Dies ist durch geeignete an sich bekannte und nicht näher erläuterte Steuerungsund Meßeinrichtungen möglich, als Meßgrößen können hier auch bestimmte Betriebszeiten oder der Temperaturanstieg an den Temperaturmeßsonden S herangezogen werden. Durch geeignete Steuerventile ist somit ein automatisierter Betrieb möglich, so daß hierzu keine Wartungsarbeiten durchzuführen sind, was besonders bei kleineren Anlagen Kostenersparnisse mit sich bringt.

Bei dem Aufheizvorgang werden im Wärmetauscher von dessen Wänden teilchenförmige Ablagerungen freigesetzt, welche die Umwelt verschmutzen könnten, da sie mit den heißen Abgasen mitgerissen werden. Daher wird bei der Durchführung des erfindungsgemäßen Verfahrens zweckmäßigerweise der in den Figuren eingezeichnete und unter Bezugnahme hierauf beschriebene Zyklon-Rußabscheider bzw. auch zwei Zyklon-Rußabscheider angebracht, bei welchen auch während des normalen Betriebs der Wärmetauscher, d. h. bei Abführung der Wärme an das Heizungssystem, zumindest der größte Teil der Rußteilchen aus den Abgasen abgeschieden wird. Dies ist insbesondere bei Einsatz von Dieselmotoren in den stationären Anlagen zum Betrieb von Wärmepumpen oder zur gekoppelten Erzeugung von Strom und Wärme zweckmäßig.

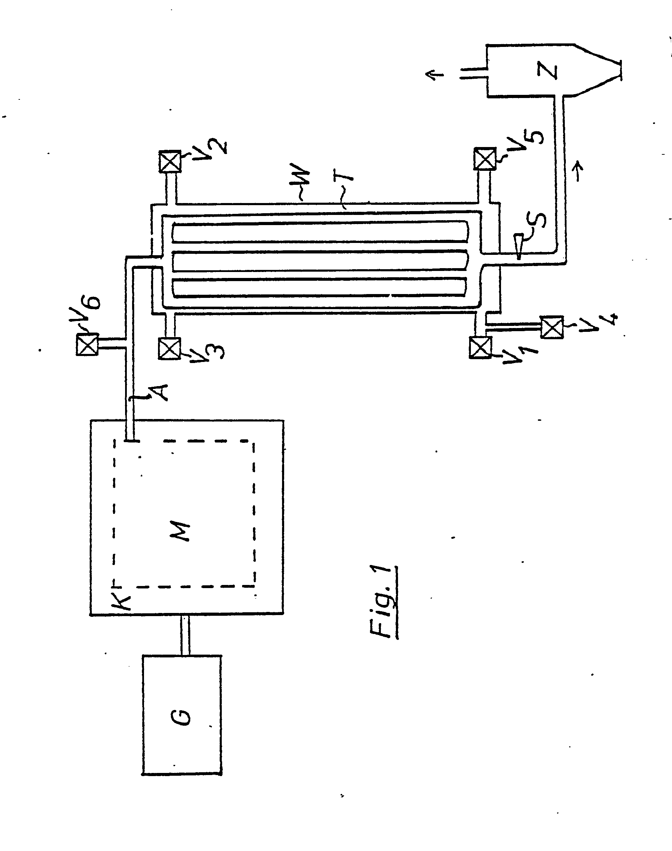

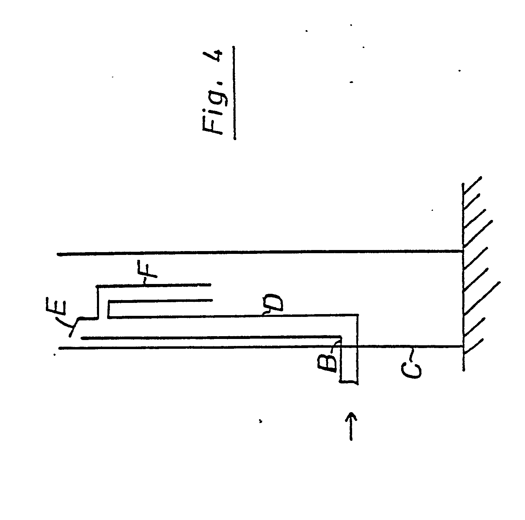

In der Fig. 4 ist schematisch ein Rohr-Rußabscheider dargestellt, wie er sich bei Durchführung des erfindungsgemäßen Verfahrens gemäß den Ausführungsformen der Fig. 1 und Fig. 2 als vorteilhaft erwiesen hat. Dieser Rußabscheider besteht aus einem äußeren Rohr C, z. B. mit einem Durchmesser von 30 cm, in das ein inneres Rohr D eingesetzt ist. Bei B erfolgt die Einleitung der Abgase in das Rohr D. Am oberen Ende trägt das Rohr D ein Verschlußklappe E, die im Normalbetrieb geöffnet ist, so daß die Abgase nach dem Verlassen des Wärmetauschers in die Atmosphäre austreten. Nachdem mit dem Aufheizen des Wärmetauschers begonnen worden ist, wird die Verschlußklappe E geschlossen und die immer heißer werdenden Abgase treten in das nach unten gerichtete und unten offene Rohr F ein. Beim Austritt aus diesem Rohr F werden sie nochmals umgelenkt und treten dann aus dem Spalt zwischen äußerem Rohr C und den Rohren D und F in die Atmosphäre. Durch die Schwerkraft und die die Umlenkung werden die schwereren Rußteilchen in dem Unterteil des Rohres C abgelagert und können von Zeit zu Zeit entnommen werden. Das äußere Rohr C kann eine Länge von 5 bis 10 m besitzen, die Durchmesser der Rohre D und F betragen vorteilhafterweise 10 bzw. 8 cm, das Rohr F kann eine Länge von 1 bis 2 m haben.

Bei der Ausführungsform des erfindungsgemäßen Verfahrens, bei welcher die Abgase durch hintereinander geschaltete Wärmetauscher geleitet werden und zwischen diesen Wärmetauschern ein Rußabscheider, insbesondere ein Zyklonabscheider, vorgesehen ist, hat es sich als vorteilhaft herausgestellt, nach dem Rußabscheider und vor dem in Strömungsrichtung zweiten Wärmetauscher eine Heizeinrichtung vorzusehen, durch welche die Abgase geleitet werden. Wenn der in Strömungsrichtung erste Wärmetauscher durch Unterbrechung der Zirkulation des sekundären Wärmetransportmediums aufgeheizt wird, verdampfen von seinen sekundärseitigen Oberflächen eventuell kondensierte Öldämpfe, die im Rußabscheider nicht entfernt werden und sich auf den kalten Wärmetauschflächen des zweiten Wärmetauschers wieder kondensieren könnten. Daher wird die Heizeinrichtung, die vorteilhafterweise aus elektrisch beheizten Stäben besteht, beim Reinigungsvorgang eingeschaltet, so daß aus dem ersten Wärmetauscher ausgetriebene Öldämpfe an den heißen Heizstäben, die sich auf einer Temperatur oberhalb von 750 °C befinden, verbrennen und nicht auf den kalten Wärmetauscherflächen des nachgeschalteten Wärmetauschers wieder kondensieren können. Bei der zuvor beschriebenen Anlage mit einem Dieselmotor von 5500 cm$^3$ betrug die elektrische Leistung der Heizstäbe 12 kW. Die von den Heizstäben abgegebene Wärme wird in dem zweiten, nachgeschalteten Wärmetauscher vollständig für Heizzwecke wiedergewonnen, so daß keine Verluste durch die Beseitigung der Öldämpfe durch Verbrennen bzw. Oxidation auftreten.

**Patentansprüche**

1. Verfahren zur Erhöhung des Wirkungsgrades bzw. zur Reinigung vor Wärmetauschern mit feststehenden Wärmetauschkanälen für ein primäres und sekundäres Wärmetransportmedium, wobei die Medien je eine Seite der Kanalwand berühren, für Abgase aus Verbrennungsmotoren von stationären Anlagen zum Betrieb von Wärmepumpen oder zur gekoppelten Erzeugung von Strom und Wärme, die als primäres Wärmetransportmedium dienen, wobei der Wärmetauscher zeitweise nach Entleeren des flüssigen sekundären Wärmetransportmediums oder bei abgeschalteter Zirkulation des fasförmigen sekundären Wärmetransportmediums durch die heißen Abgase auf eine zur selbsttätigen Reinigung der Wärmetauscherflächen ausreichende Temperatur aufgeheizt wird.

2. Verfahren nach Anspruch 1, dadurch gekennzeichnet, daß bei Anwendung eines flüssigen, sekundären Wärmetransportmediums wenigstens zwei Wärmetauscher und gegebenenfalls ein Ausgleichsgefäß für das flüssige sekundäre Wärmetransportmedium vorgesehen werden, daß die heißen Abgase wechselweise durch einen der Wärmetauscher geleitet werden und daß zum Entleeren eines ersten Wärmetauschers zumindest dessen oberes Zirkulationsventil für das flüssige sekundäre Wärmetransportmedium geschlossen wird, das nach Aufheizen und Verdampfen aus dem Wärmetauscher in das Ausgleichsgefäß gedrückt wird, und daß nach Reinigung der Wärmetauscherflächen dieses ersten Wärmetauschers die heißen Abgase zum Abkühlenlassen dieses ersten Wärmetauschers auf einen zweiten Wärmetauscher geschaltet werden.

3. Verfahren nach Anspruch 1, dadurch gekennzeichnet, daß bei Anwendung eines flüssigen, sekundären Wärmetransportmediums zwei Wärmetauscher und gegebenenfalls ein Ausgleichsgefäß für das flüssige sekundäre Wärmetransportmedium vorgesehen werden, daß die heißen Abgase in wechselnder Strömungsrichtung durch die hintereinandergeschalteten Wärmetauscher geleitet werden und daß zum Entleeren des in Strömungsrichtung der Abgase ersten Wärmetauschers zumindest dessen oberes Zirkulationsventil für das flüssige sekundäre Wärmetransportmedium geschlossen wird, das nach Aufheizen und Verdampfen aus dem Wärmetauscher in das Ausgleichsgefäß gedrückt wird, und daß nach Reinigung der Wärmetauscherflächen dieses ersten Wärmetauschers die heißen Abgase zum Abkühlen dieses ersten Wärmetauschers in den zweiten Wärmetauscher eingeleitet werden.

4. Verfahren nach Anspruch 3, dadurch gekennzeichnet, daß die Abgase durch einen zwischen den beiden Wärmetauschern angeordneten Rußabscheider, insbesondere einen Zyklonabscheider, geleitet werden.

5. Verfahren nach einem der vorhergehenden Ansprüche, dadurch gekennzeichnet, daß es periodisch zu vorher eingestellten, frei wählbaren Zeitpunkten automatisch durchgeführt wird.

6. Verfahren nach einem der Ansprüche 1 bis 4, dadurch gekennzeichnet, daß es nach einer vorher eingestellten, frei wählbaren Betriebszeit des Verbrennungsmotors automatisch durchgeführt wird.

7. Verfahren nach einem der Ansprüche 1 bis 4, dadurch gekennzeichnet, daß es bei Erreichen einer vorher gewählten Grenztemperatur der aus dem Wärmetauscher austretenden Abgase automatisch durchgeführt wird.

8. Verfahren nach einem der Ansprüche 1 bis 4, dadurch gekennzeichnet, daß es zu Zeiten hohen Bedarfs an mechanischer Leistungsabgabe des Verbrennungsmotors jedoch geringen Wärmebedarfs automatisch durchgeführt wird.

9. Verfahren nach einem der vorhergehenden Ansprüche, dadurch gekennzeichnet, daß es bei wenigstens 50 % der möglichen mechanischen Leistungsabgabe des Verbrennungsmotors durchgeführt wird.

10. Verfahren nach einem der Ansprüche 1 oder 2, dadurch gekennzeichnet, daß die Abgase nach dem Austritt aus dem Warmetauscher durch einen umschaltbaren Rohr-Ruß-Abscheider geleitet werden.

11. Verfahren nach einem der Ansprüche 1 oder 2, dadurch gekennzeichnet, daß die Abgase nach dem Austritt aus dem Wärmetauscher durch einen Zyklon-Rußabscheider geleitet werden.

12. Verfahren nach Anspruch 1, dadurch gekennzeichnet, daß bei Benutzung eines Wärmetauschers mit flüssigem, sekundärem Wärmetransportmedium der Wärmetauscher nach dem Aufheizvorgang vor dem Wiedereinfüllen des flüssigen Wärmetransportmediums durch Einblasen von Luft in den sekundären Wärmekreislauf und/oder zusammen mit Abgas in den Wärmetauscher abgekühlt wird.

13. Verfahren nach Anspruch 4, dadurch gekennzeichnet, daß die Abgase nach dem Rußabscheider vor dem Einleiten in den zweiten Wärmetauscher durch eine Heizeinrichtung geleitet werden.

**Claims**

1. Method of increasing the operational efficiency of, or of cleaning, heat exchangers with fixed heat exchange passages for a primary and secondary heat transport medium, in which the media each contact one side of the passage wall, for exhaust gases from combustion engines of stationary installations for operating heat pumps or for the coupled production of electrical power and heat, which serve as the primary heat transport medium, whereby the heat exchanger is temporarily heated by the hot exhaust gases to a temperature sufficient for the automatic cleaning of the heat exchanger surfaces after emptying the liquid secondary heat transport medium or with the circulation of the gaseous secondary heat transport medium terminated.

2. Method as claimed in claim 1, characterised in that when using a liquid secondary heat transport medium at least two heat exchangers and optionally a compensation tank for the liquid secondary heat transport medium are provided, that the hot exhaust gases are passed alternately through one of the heat exchangers and that for the emptying of a first heat exchanger at least its upper ciculation valve for the liquid secondary heat transport medium is closed, which medium is forced out of the heat exchanger into the compensation vessel after heating and evaporation, and that after cleaning of the heat exchanger surfaces of this first heat exchanger the hot exhaust gases are switched to a second heat exchanger to permit this first heat exchanger to cool down.

3. Method as claimed in claim 1, characterised in that when using a liquid secondary heat transport medium two heat exchangers and optionally a compensation vessel for the liquid secondary heat transport medium are provided, that the hot exhaust gases are passed in alternating flow directions through the heat exchangers which are connected in series and that for emptying the first heat exchanger in the flow direction of the exhaust gases at least its upper circulation valve for the liquid secondary heat transport medium is closed, which medium is forced out of the heat exchanger into the compensation vessel after heating and evaporation and that after cleaning of the heat exchanger surfaces of this first heat exchanger the hot exhaust gases are fed into the second heat exchanger for cooling of this first heat exchanger.

4. Method as claimed in claim 3, characterised in that the exhaust gases are passed through a soot separator, in particular a cyclone separator, arranged between the two heat exchangers.

5. Method as claimed in one of the preceding claims, characterised in that it is automatically performed periodically at previously determined, freely selectable times.

6. Method as claimed in one of claims 1 to 4, characterised in that it is automatically performed after a previously determined, freely selectable operational time of the combustion motor.

7. Method as claimed in one of claims 1 to 4, characterised in that it is automatically performed when the exhaust gases leaving the heat exchanger reach a previously selected threshold temperature.

8. Method as claimed in one of claims 1 to 4, characterised in that it is automatically performed at times of high demand as regards mechanical power delivery of the combustion motor but low heat demand.

9. Method as claimed in one of the preceding claims, characterised in that it is performed at at least 50% of the possible mechanical power delivery of the combustion motor.

10. Method as claimed in one of claims 1 or 2, characterised in that after leaving the heat exchanger the exhaust gases are passed through a reversible tubular soot separator.

11. Method as claimed in one of claims 1 or 2, characterised in that after leaving the heat exchanger the exhaust gases are passed through a cyclonic soot separator.

12. Method as claimed in claim 1, characterised in that when using a heat exchanger with a liquid secondary heat transport medium the heat exchanger is cooled down after the heating process before refilling it with liquid heat transport medium by blowing air into the secondary heat circuit and/or together with exhaust gas into the heat exchanger.

13. Method as claimed in claim 4, characterised in that the exhaust gases are passed through a heating device after the soot separator before the introduction into the second heat exchanger.

**Revendications**

1. Procédé pour l'augmentation du rendement, en particulier pour le nettoyage d'échangeurs de chaleur dotés de canaux échangeurs de chaleur fixes pour des milieux caloporteurs primaire et secondaire, les milieux se trouvant chacun en contact avec un côté de la paroi du canal, pour des gaz d'échappement issus de moteurs à combustion d'installations fixes pour le fonctionnement de pompes à chaleur ou pour la production couplée de courant et de chaleur qui servent de milieu caloporteur primaire, dans lequel l'échangeur de chaleur est chauffé de façon intermittente par les gaz d'échappement chauds, après vidange du milieu caloporteur secondaire liquide ou par arrêt de la circulation du milieu caloporteur secondaire gazeux, à une température suffisante pour le nettoyage automatique des surfaces de l'échangeur de chaleur.

2. Procédé selon la revendication 1, caractérisé en ce que, lors de l'emploi d'un milieu caloporteur secondaire liquide, il est prévu au moins deux échangeurs de chaleur et, le cas échéant, un récipient de détente pour le milieu caloporteur secondaire liquide, que les gaz d'échappement chauds sont alternativement envoyés dans un des échangeurs de chaleur et que pour la vidange d'un premier échangeur de chaleur, au moins la soupape de circulation supérieure de celui-ci est fermée pour le milieu caloporteur secondaire liquide qui est introduit sous pression dans le récipient de détente après chauffage et vaporisation à partir de l'échangeur de chaleur et qu'après nettoyage des surfaces échangeuses de ce premier échangeur de chaleur, les gaz d'échappement chauds sont déviés vers un deuxième échangeur de chaleur pour permettre le refroidissement dudit premier échangeur de chaleur.

3. Procédé selon la revendication 1, caractérisé en ce que, lors de l'emploi d'un milieu caloporteur secondaire liquide, il est prévu deux échangeurs de chaleur et, le cas échéant, un récipient de détente pour le milieu caloporteur secondaire liquide, que les gaz d'échappement chauds sont envoyés, dans un sens d'écoulement alterné, à travers les échangeurs de chaleur montés en série et que pour la vidange du premier échangeur de chaleur dans le sens de circulation des gaz d'échappement, au moins la soupape de circulation supérieure de celui-ci est fermée pour le milieu caloporteur secondaire liquide qui est introduit sous pression dans le récipient de détente après chauffage et vaporisation à partir de l'échangeur de chaleur et qu'après nettoyage des surfaces échangeuses de ce premier échangeur de chaleur, les gaz d'échappement chauds sont envoyés dans le deuxième échangeur de chaleur en vue du refroidissement dudit premier échangeur de chaleur.

4. Procédé selon la revendication 3, caractérisé en ce que les gaz d'échappement sont dirigès à travers un séparateur de suie disposé entre les deux échangeurs de chaleur, notamment un séparateur à cyclone.

5. Procédé selon l'une des revendications précédentes, caractérisé en ce qu'il est conduit automatiquement et périodiquement à des moments prédéterminés pouvant être librement choisis.

6. Procédé selon l'une des revendications 1 à 4, caractérisé en ce qu'il est conduit automatiquement après une durée de fonctionnement prédéterminée du moteur à combustion pouvant être librement choisie.

7. Procédé selon l'une des revendications 1 à 4, caractérisé en ce qu'il est conduit automatiquement après atteinte de la température limite présélectionnée des gaz s'échappant de l'échangeur de chaleur.

8. Procédé selon l'une des revendications 1 à 4, caractérisé en ce qu'il est conduit automatiquement à des moments de forte demande en puissance mécanique débitée du moteur à combustion, mais de faible demande en chaleur.

9. Procédé selon l'une des revendications précédentes, caractérisé en ce qu'il est conduit à au moins 50% de la puissance mécanique débitée possible du moteur à combustion.

10. Procédé selon l'une des revendications 1 ou 2, caractérisé en ce que les gaz d'échappement sont conduits à travers un séparateur de suie tubulaire reversible après la sortie de l'échangeur de chaleur.

11. Procédé selon l'une des revendications 1 ou 2, caractérisé en ce que les gaz d'échappement sont conduits à travers un séparateur de suie à cyclone après la sortie de l'échangeur de chaleur.

12. Procédé selon la revendication 1, caractérisé en ce que, lors de l'emploi d'un échangeur de chaleur avec un milieu caloporteur secondaire liquide, l'échangeur de chaleur est refroidi après l'opération de chauffage précédant le rechargement du milieu caloporteur liquide par insufflation d'air dans le circuit de chaleur secondaire et/ou simultanément avec les gaz d'échappement dans l'échangeur de chaleur.

13. Procédé selon la revendication 4, caractérisé en ce que les gaz d'échappement sont envoyés, après le séparateur de suie et avant introduction dans le deuxième échangeur de chaleur, à travers une installation de chauffage.

Fig.1

*Fig. 2*

0126737

Fig.3

Fig. 4